# DEMANDE DE BREVET EUROPEEN

(11) **EP 2 666 987 A1**
(43) Date de publication de la demande: **27.11.2013**
(21) Numéro de dépôt: 13164592.1
(22) Date de dépôt: 19.04.2013
(51) Int. Cl.: F01N 9/00

(54) **Procédé de commande de regeneration d'un filtre à particules de système d'échappement**

(30) Priorité: 25.05.2012 FR 1254877
(71) Demandeur: PEUGEOT CITROËN AUTOMOBILES SA, 78140 Velizy-Villacoublay (FR)
(72) Inventeur: Fauré, Sébastien, 92500 Rueil Malmaison (FR); Bernichon, Thomas, 75012 Paris (FR)

(57) **Abrégé**

Procédé de commande de régénération d'un filtre à particules de système d'échappement pour véhicule automobile. Une étape d'invitation (14M) prévient le conducteur du véhicule qu'il peut lancer une régénération du filtre par une commande via une interface susceptible d'être commandée par le conducteur lors d'une étape de validation (14B). Après l'étape d'invitation et sa validation par le conducteur, pendant la régénération du filtre, il est procédé à une étape de détermination de degré de confiance de validation (174) en fonction du degré de correspondance entre les conditions de roulage pendant ladite régénération et des conditions prédéterminées d'efficacité de régénération, puis à une étape de mémorisation du degré de confiance. Suivant ledit degré mémorisé, les régénérations ultérieures pourront être effectuées soit après une étape de validation d'invitation ultérieure, soit automatiquement par un automate sans prise en compte d'étape ultérieure de validation. Véhicule à automate mettant en oeuvre ledit procédé.

## Description

La présente invention est relative à un procédé de commande de régénération d'un filtre à particules de système d'échappement.

Plus particulièrement, l'invention concerne un procédé de commande de régénération d'un filtre à particules de système d'échappement pour véhicule automobile, comprenant une étape d'invitation pour prévenir le conducteur du véhicule qu'il peut lancer une régénération du filtre par une commande via une interface homme-machine susceptible d'être commandée par le conducteur lors d'une étape de validation de ladite invitation.

Ce genre de procédé est connu du document EP1582720, mais il concerne un cas particulier de fonctionnement de régénération de filtre à particules qui peut être contraignant pour le conducteur. Compte tenu de l'importance de la bonne réalisation de la régénération, faire participer le conducteur est intéressant mais nécessite tout de même des contrôles pour éviter des contraintes pour le conducteur qui pourrait alors, pour simplifier ses manipulations, être amené par exemple à déclencher des régénérations lors de conditions de fonctionnement non appropriées du moteur et de son système d'échappement.

La présente invention a notamment pour but de remédier aux inconvénients de l'art antérieur.

A cet effet, l'invention a pour objet un procédé de commande de régénération d'un filtre à particules de système d'échappement pour véhicule automobile, comprenant une étape d'invitation pour prévenir le conducteur du véhicule qu'il peut lancer une régénération du filtre par une commande via une interface homme-machine susceptible d'être commandée par le conducteur lors d'une étape de validation de ladite invitation. Après l'étape d'invitation ayant donné lieu à l'étape de validation par le conducteur, pendant la régénération du filtre, il est procédé à une étape de détermination de degré de confiance de validation en fonction du degré de correspondance entre les conditions de roulage pendant ladite régénération et des conditions prédéterminées d'efficacité de régénération, puis à une étape de mémorisation du degré de confiance de manière que, suivant le degré de confiance mémorisé, les régénérations à effectuer ultérieurement puissent être effectuées soit après une étape de validation d'invitation ultérieure, soit automatiquement par un automate sans prise en compte d'étape ultérieure de validation.

Dans divers modes de réalisation du procédé selon l'invention, on peut éventuellement avoir recours en outre à l'une et/ou à l'autre des dispositions suivantes :
- le degré de correspondance entre les conditions de roulage pendant la régénération et les conditions prédéterminées d'efficacité de régénération est pondéré suivant une valeur mémorisée antérieurement de degré de correspondance ;
- le degré de correspondance entre les conditions de roulage pendant la régénération et les conditions prédéterminées d'efficacité de régénération est déterminé en fonction de données de distance parcourue et de temps de parcours pendant la régénération ;
- les conditions de roulage pendant la régénération sont en correspondance des conditions prédéterminées d'efficacité de régénération quand il est déterminé lors de l'étape de détermination du degré de confiance que le véhicule a parcouru une distance supérieure à sensiblement quinze kilomètres en dix minutes après l'étape de validation ;
- les conditions de roulage pendant la régénération sont en correspondance des conditions prédéterminées d'efficacité de régénération quand il est déterminé lors de l'étape de détermination du degré de confiance que le véhicule a parcouru une distance supérieure à sensiblement dix kilomètres en vingt minutes après l'étape de validation ;
- les conditions de roulage pendant la régénération sont d'une part en correspondance des conditions prédéterminées d'efficacité de régénération quand il est déterminé lors de l'étape de détermination du degré de confiance que le véhicule a parcouru une distance supérieure à sensiblement sept kilomètres en trente minutes après l'étape de validation et d'autre part sans correspondance avec les conditions prédéterminées d'efficacité de régénération quand le véhicule a parcouru une distance inférieure ou égale à sensiblement sept kilomètres en trente minutes après l'étape de validation ;
- quand le véhicule effectue un parcours en milieu urbain, les conditions de roulage pendant la régénération sont sans correspondance avec les conditions prédéterminées d'efficacité de régénération ;
- le degré de correspondance entre les conditions de roulage pendant la régénération et les conditions prédéterminées d'efficacité de régénération est déterminé en fonction du régime du moteur et des variations de ce régime pendant la régénération ;
- pendant l'étape de détermination de degré de confiance en fonction du degré de correspondance entre les conditions de roulage pendant la régénération et des conditions prédéterminées d'efficacité de régénération, un coefficient de confiance est déterminé puis est mémorisé lors de l'étape de mémorisation.

Par ailleurs, l'invention a également pour objet un véhicule automobile comportant un moteur thermique, un système d'échappement à filtre à particules, un automate de gestion de procédé de commande de régénération du filtre à particules, un dispositif adapté à inviter le conducteur du véhicule à lancer une régénération du filtre et une interface homme-machine susceptible d'être commandée par le conducteur pour valider ladite invitation de lancement de la régénération, le procédé géré par l'automate étant conforme à l'invention.

D'autres buts, caractéristiques et avantages de l'invention apparaîtront au cours de la description suivante d'un de ses modes de réalisation, donné à titre d'exemple non limitatif, en regard des dessins joints dans lesquels :
- la figure 1 est un schéma de principe d'architecture d'un automate de gestion de procédé selon l'invention de commande de régénération d'un filtre à particules de système d'échappement pour véhicule automobile, montrant le superviseur de cet automate ;
- la figure 2 est un schéma de principe d'un détail de stratégie de commande de l'automate conforme à la figure 1 pour la gestion du procédé selon l'invention.

Sur les différentes figures, les mêmes références désignent des éléments identiques ou similaires. En se reportant aux figures, la référence 10 désigne un automate de gestion de procédé selon l'invention de commande de régénération d'un filtre à particules de système d'échappement pour véhicule automobile véhicule.

Ledit automate 10 permettant des régénérations de filtre à particules pour le procédé selon l'invention est un dispositif de contrôle de commande qui est embarqué dans le calculateur gérant le fonctionnement du moteur du véhicule. Dans la plupart des conditions de fonctionnement, ce calculateur moteur est automatique suivant diverses cartographies mémorisées et il tient compte par exemple de la commande d'accélérateur résultant de l'action du conducteur du véhicule.

L'automate 10 comprend un superviseur automatique 12 de commande de régénération du filtre à particules. Ce superviseur 12 donne au reste du calculateur moteur, via une sortie de demande de régénération 12S, les ordres propres à l'exécution des régénérations du filtre à particules. Le superviseur automatique 12 présente un certain nombre d'entrées et effectue les calculs pour la consigne de sortie correspondant auxdits ordres de régénération du filtre. Il est à noter que lors d'une telle régénération, de manière connue, les paramètres d'injection de carburant dans le moteur peuvent être modifiés.

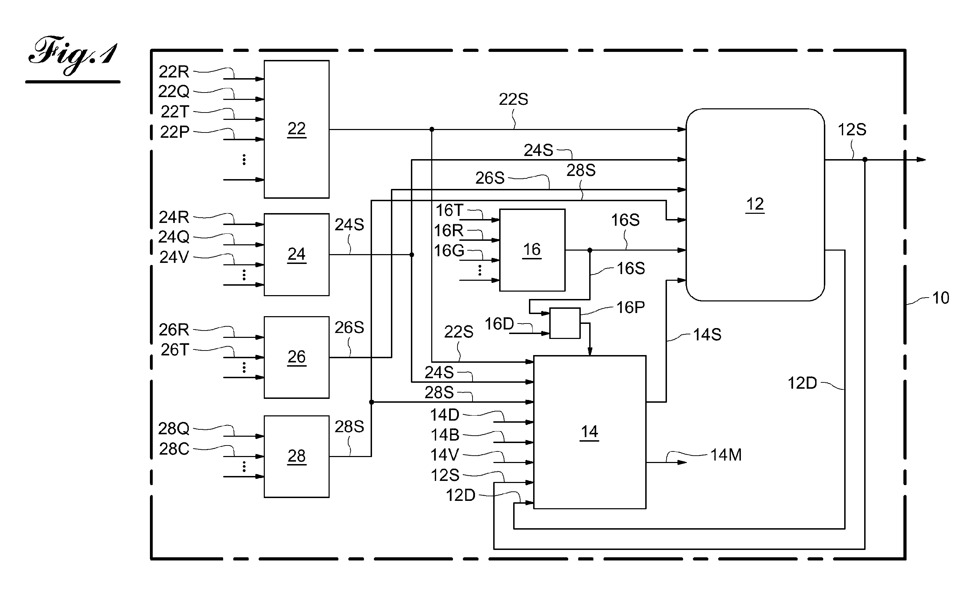

Parmi ses entrées, le superviseur automatique 12 prend en compte une commande manuelle de régénération du filtre, gérée par un module de stratégie de régénération manuelle 14, comme la figure 1 le montre pour illustrer un exemple de réalisation de l'automate.

Le module de stratégie de régénération manuelle 14 comporte une sortie de message 14M pour transmettre des données à une interface homme machine qui est adaptée à être consultée par le conducteur, par exemple en étant constituée par un voyant ou par un pictogramme sur un écran équipant la planche de bord du véhicule. Dans certaines conditions d'utilisation du véhicule, par exemple suivant l'état de chargement en suies du filtre à particules, parfois appelé état de colmatage, et quand les conditions de fonctionnement du véhicule sont favorables pour qu'une régénération soit effectuée, ledit module 14 envoie par sa sortie de message 14M une donnée à l'interface homme machine pour inviter le conducteur à accepter ou non une demande de régénération du filtre à particules. La réponse à l'invitation est constituée par exemple par la validation d'un menu dudit écran par exemple tactile ou par l'appui sur un bouton de l'interface homme machine. Cette validation indique à l'automate que le véhicule sera prochainement utilisé sur un trajet non urbain, par exemple sur autoroute, dans les dizaines de minutes qui vont suivre. La réponse à l'invitation peut aussi être un refus d'invitation si le conducteur sait qu'il utilisera prochainement le véhicule pour des trajets urbains.

Des données de sortie dudit module 14 de commande manuelle sont transmises au superviseur automatique 12 via une sortie d'envoi de demande de régénération manuelle 14S. Ces données dépendent de la réponse du conducteur, mais aussi d'autres paramètres de roulage ou d'utilisation du véhicule qui sont gérés de manière automatique dans l'automate, via le superviseur automatique.

L'automate 10 comporte aussi un module d'autorisation de régénération 16, dont la sortie d'autorisation de régénération 16S est reliée tant au superviseur automatique 12 qu'au module 14 de commande manuelle. La liaison entre le module d'autorisation de régénération 16 et le module 14 de commande manuelle s'effectue via un module d'opération 16P qui additionne d'une part la donnée de sortie d'autorisation de régénération 16S du module d'autorisation de régénération 16 et d'autre part une entrée d'autorisation d'utilisation de stratégie manuelle 16D. Cette donnée d'autorisation d'utilisation est paramétrable par exemple via un écran multifonction d'interface homme-machine équipant le poste de conduite et pouvant être manipulé par le conducteur du véhicule pour fixer divers paramètres de fonctionnement du véhicule.

L'entrée d'autorisation d'utilisation de stratégie manuelle 16D est activée quand le conducteur a décidé d'utiliser l'option de fonctionnement du véhicule avec invitation à commander manuellement une régénération. L'entrée d'autorisation d'utilisation de stratégie manuelle 16D est désactivée quand le conducteur a décidé de ne pas utiliser l'option de fonctionnement du véhicule avec invitation de régénération. Dans ce dernier cas, l'automate 10 fonctionne en ne gérant les régénérations de filtre à particules que par le mode automatique.

Le module d'autorisation de régénération 16 utilise en particulier une entrée de donnée de température d'eau 16T de refroidissement du moteur, une entrée d'état du moteur 16R et une entrée de diagnostique 16G.

L'automate 10 comprend aussi d'autres modules dont les données de sortie sont utilisées par le module 14 de commande manuelle de régénération et le superviseur automatique 12 pour le fonctionnement du véhicule avec des régénérations de filtre à particules, le cas échéant après réponse positive du conducteur à une invitation de régénération manuelle de filtre à particules en faisant intervenir le conducteur.

L'automate 10 comprend ainsi un module 22 de modèle de chargement du filtre à particules, qui utilise en particulier une entrée de régime et de couple moteur 22R, une entrée de pression et de quantité injectée 22Q, une entrée de température d'eau et d'huile 22T, une entrée 22 de différence de pression entre l'amont et l'aval du filtre à particules... Les données de ces entrées sont représentatives du flux d'échappement produit par le moteur et du chargement en suie du filtre à particules.

L'automate 10 comprend un module 24 de modèle ou mesure de dilution, qui utilise en particulier une entrée de régime et de couple moteur 24R, une entrée de pression et de quantité injectée 24Q, une entrée d'indication de vidange 24V... Les données de ces entrées sont représentatives de la qualité de l'huile du moteur ou de sa dilution par le carburant. En effet, l'injection de carburant souvent en excès dans le moteur et tardive dans le cycle du moteur lors des phases de régénération entraîne le cas échéant un passage de carburant dans l'huile du moteur, quand du carburant non brûlé tapisse les parois du cylindre et se mélange au film d'huile recouvrant les parois.

L'automate 10 comprend un module 26 de descripteur de sévérité de roulage qui utilise en particulier une entrée de régime, vitesse et accélération 26R et une entrée de thermique échappement moteur 26T qui permettent de juger de l'utilisation du moteur et de la possibilité ou de l'impossibilité pour le moteur de fonctionner dans les conditions de régénération. Par exemple l'utilisation du moteur à trop faibles régime ou charge n'est pas favorable à une régénération du filtre à particules. De plus, la température d'échappement est un paramètre influençant directement sur le fonctionnement du filtre à particules qui doit être suffisamment chaud pour qu'une régénération puisse avoir lieu. Des gaz d'échappement trop froids ne permettent pas l'exécution d'une régénération du filtre à particules (amorçage et exotherme limité du catalyseur d'oxydation).

L'automate 10 comprend un module 28 de calcul de surconsommation de carburant qui utilise en particulier une entrée de quantité de carburant de post injection 28Q et une entrée de quantité d'injection classique 28C, ces entrées permettant d'observer l'injection supplémentaire lors d'une régénération et de calculer la surconsommation due à celle-ci.

Le module 14 de commande manuelle utilise une entrée 14D de distance parcourue par le véhicule depuis la dernière vidange. Le module 14 de commande manuelle utilise aussi une entrée 14V de vitesse du véhicule. Le module 14 de commande manuelle utilise également une entrée 14B dite d'appui sur un bouton de régénération pour prendre en compte la réponse du conducteur à une invitation de régénération manuelle de filtre à particules. Le module 14 de commande manuelle utilise également une sortie de consigne 12D de type de demande de régénération venant du superviseur automatique 12, pour produire la sortie de message 14M à l'attention du conducteur.

En appuyant sur le bouton 14B de commande manuelle de régénération de filtre à particules, le conducteur indique à l'automate 10 qu'il prévoit d'utiliser le véhicule sur une distance minimale en roulant pendant un certain temps minimum avant de couper lui-même le moteur. L'automate 10 attribuera un coefficient de confiance déterminé suivant que le parcours effectué par le véhicule après l'acceptation de l'invitation corresponde à un parcours valable pour effectuer la régénération du filtre à particules ou ne corresponde pas à un tel parcours. Si le parcours effectivement effectué est par exemple de type autoroutier, le coefficient de confiance sera bon car ce parcours est valable et la régénération sera effectuée correctement. Si le parcours est de type urbain ou si le conducteur arrête le moteur seulement quelques minutes après l'acceptation de l'invitation, alors le coefficient de confiance sera plus ou moins mauvais car le conducteur aura répondu positivement à l'invitation sans effectuer ensuite de parcours adéquat pour régénération du filtre à particules.

Tant le module 14 de commande manuelle que le superviseur automatique 12 utilisent la sortie 22S du module 22 de modèle de chargement du filtre à particules, la sortie 24S du module 24 de modèle ou mesure de dilution et la sortie 28S du module 28 de calcul de surconsommation de carburant. Par contre, dans l'exemple de réalisation considéré ici, seul le superviseur automatique 12 utilise la sortie 26S du module 26 de descripteur de sévérité de roulage.

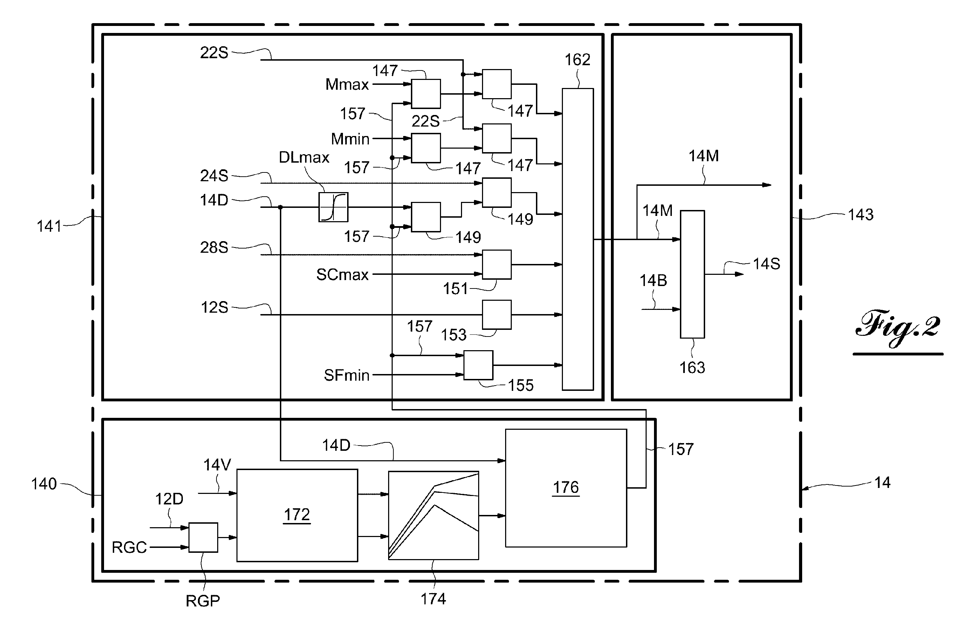

La stratégie du module de stratégie de régénération manuelle 14 est illustrée dans son principe à la figure 2, suivant un mode de réalisation décrit à titre d'exemple.

Dans cette stratégie sont utilisés plusieurs blocs de calcul, dénommés bloc de demande conducteur 140, bloc de logique d'allumage de message 141 et bloc d'envoi de demande de régénération 143.

Le bloc de calcul de logique d'allumage de message 141 comporte, dans l'exemple de réalisation représenté, quatre opérateurs de calculs de chargement référencés 147 pour utiliser les données suivantes : sortie 22S du module 22 de modèle de chargement du filtre à particules, donnée Mmax de masse maximum de suie dans le filtre à particules, donnée Mmin de masse minimum de suie dans le filtre à particules. Les données de masse de suie sont représentatives du taux de chargement en suies du filtre à particules et sont représentatives de la distance que peut encore effectuer le véhicule avant qu'une régénération dudit filtre soit vraiment nécessaire.

Ledit bloc de logique d'allumage de message 141 comporte deux opérateurs de calculs de dilution référencés 149, mais aussi une cartographie de dilution de carburant dans l'huile, référencée DLmax, pour utiliser les données suivantes : sortie 24S du module 24 de modèle ou mesure de dilution et entrée 14D de distance parcourue par le véhicule depuis la dernière vidange. Si les régénérations du filtre à particules sont trop fréquentes il y a augmentation du risque de dilution de huile par le carburant injecté en excès est tardivement dans le cycle du moteur. C'est pourquoi, les régénérations du filtre à particules doivent être effectuées adéquat quand ledit filtre est suffisamment chargé en suies.

Le bloc de logique d'allumage de message 141 comporte également un opérateur de calculs de surconsommation, référencé 151, pour utiliser les données de la sortie 28S du module 28 de calcul de surconsommation de carburant et une donnée SCmax de surconsommation maximale de régénération. Il est important que l'automate 10 puisse contrôler la surconsommation représentative du fonctionnement du moteur à la mise en oeuvre d'une régénération pour limiter l'impact client de consommation carburant (et conséquemment d'émissions de CO2).

Le bloc de logique d'allumage de message 141 comporte également un opérateur de calculs de prise en compte de la sortie de demande de régénération 12S, cet opérateur étant référencé 153. Il s'agit ici de vérifier qu'il n'y a pas de demande de régénération en cours (automatique ou manuelle).

Le bloc de logique d'allumage de message 141 comporte encore un opérateur de confiance pour prendre en compte d'une donnée SFmin de seuil de confiance minimum, cet opérateur étant référencé 155. Il s'agit ici de savoir si le conducteur a relativement bien (ou pas) utilisé son option de régénération manuelle par le passé. Le but est de ne plus inviter un conducteur à régénérer lui-même son filtre à particules si par le passé, il n'a pas tenu de manière importante son engagement à rouler correctement quand il valide l'invitation.

Les opérateurs de calculs de chargement référencés 147, les opérateurs de calculs de dilution référencés 149 et l'opérateur de confiance 155 utilisent aussi un indicateur de confiance filtré 157 qui est généré en sortie du bloc de demande conducteur 140. Le bloc de logique d'allumage de message 141 présente, en sortie de ses opérateurs, un opérateur d'addition de logique d'allumage de message 162 pour produire la sortie de message 14M du module de stratégie de régénération manuelle 14. Cette sortie de message 14M est aussi utilisée, avec l'entrée 14B dite d'appui sur un bouton de régénération, pour produire, à la sortie d'un opérateur d'addition de message 163, la sortie d'envoi de demande de régénération manuelle 14S du module de stratégie de régénération manuelle 14. L'opérateur d'addition de message 163 est dans le bloc d'envoi de demande de régénération 143 qui constitue le bloc de sortie du module de stratégie de régénération manuelle 14.

Le bloc de demande conducteur 140 comporte une opération 172 de calcul de temps et de distance depuis le dernier appui de validation de régénération manuelle, à partir de l'entrée 14V de vitesse du véhicule, de la sortie de consigne 12D de type de demande de régénération venant du superviseur automatique 12 et d'un paramètre de régénération manuelle par le conducteur, ce paramètre étant référencé RGC à la figure 2. Un comparateur référencé RGP traite le paramètre RGC et la sortie de consigne 12D en entrée de l'opération 172 de calcul de temps et de distance depuis le dernier appui. Le résultat de cette opération 172 de distance et de temps depuis le dernier appui est utilisé, sur la base d'une cartographie de courbes de coefficients de confiance, dans une opération 174 d'attribution puis de mémorisation d'un indicateur de confiance instantanée.

Le bloc de demande conducteur 140 comporte une opération 176 de filtrage du coefficient de degré de confiance mémorisé sur les N derniers appuis de validation par le conducteur de régénération manuelle. Les N derniers appuis sont par exemple au nombre de cinq. Cette opération de filtrage 176 utilise d'une part le résultat de l'opération 174 de critère de confiance instantanée et d'autre part l'entrée 14D de distance parcourue par le véhicule depuis la dernière vidange, pour générer l'indicateur de confiance filtré 157 en sortie du bloc de demande conducteur 140. C'est cet indicateur 157 de coefficient filtré qui est utilisé dans le bloc 141 de logique d'allumage de message.

Le fonctionnement de l'automate 10 ressort déjà en partie de la description qui précède et va maintenant être détaillé.

Une régénération du filtre à particules doit être effectuée régulièrement suivant les conditions de roulage du véhicule. En effet, suivant les profils des parcours effectués par le véhicule, le filtre à particules se colmate plus ou moins rapidement. Par exemple des parcours majoritairement urbains à faible vitesse moyenne et à faible régime moteur, avec aussi de nombreuses variations de régime, entraîne un colmatage plus rapide du filtre à particules que des parcours de type autoroutiers pendant lesquels le régime du moteur oscille avec variations progressives entre 2500 et 3500 tr/min par exemple.

Par ailleurs, une régénération de filtre à particules s'effectue quand ce dernier est à haute température, c'est-à-dire généralement quand le moteur tourne depuis un certain temps et qu'il est chaud, les gaz d'échappement étant alors également chauds. En outre, le régime moteur doit être suffisant, par exemple au moins 1500 tr/min, pour que les gaz échappement soient chauds et qu'une régénération du filtre à particules puisse être favorablement effectuée. Lors de cette régénération, pour que les gaz échappement restent bien chauds, la consigne d'injection de carburant dans le moteur est augmentée ce qui induit une surconsommation créant de la chaleur. Cette augmentation de quantité de carburant injecté est mise en oeuvre par une injection tardive dans le cycle du moteur, c'est pourquoi il est question d'une post-injection de carburant qui n'est pas brûlé dans le moteur mais qui est brûlé dans le filtre à particules à haute température.

En outre, le paramètre de distance parcourue depuis la dernière vidange est important pour éviter d'effectuer trop souvent une régénération du filtre à particules quand l'huile du moteur est relativement vieille et qu'il faut éviter une dilution lui faisant encore perdre des qualités de lubrification.

Tous ces paramètres représentatifs du colmatage, représentatifs du type de parcours par la vitesse du véhicule et son régime moteur, relatifs aux températures, et relatifs à l'injection de carburant correspondent aux entrées gérées par les différents modules de l'automate qui sont référencés 16, 22, 24, 26 et 28 à la figure 1. Ces paramètres sont aussi gérés par le superviseur automatique 12.

Quand le superviseur automatique 12 de commande de régénération du filtre à particules estime qu'une régénération doit être effectuée dans un futur proche, le module 14 de stratégie de régénération manuelle, qui tient compte en outre de la masse des suies dans le filtre à particules, commande par sa sortie de message 14M l'allumage du voyant correspondant ou l'affichage d'un message pour que le conducteur puisse valider ou non une régénération commandée manuellement.

Si le conducteur s'apprête à effectuer un trajet incompatible avec la régénération du filtre à particules, il ne répond pas tout de suite à l'invitation de l'automate 10. Il peut valider ultérieurement l'invitation, quand il commence un trajet suffisamment longtemps compatible avec la régénération du filtre à particules, pendant lequel la vitesse moyenne du véhicule sera suffisante, par exemple un trajet durant plus de dix minutes à une vitesse supérieure à 60 km/h de moyenne.

Dès que le conducteur, par l'activation de l'entrée 14B dite d'appui sur un bouton de régénération, valide une invitation de régénération du filtre à particules pour lancer cette régénération, l'automate 10 lance cette régénération.

Dès le début de cette régénération, l'automate 10 commence à calculer le temps écoulé depuis la validation de l'invitation et la distance parcourue depuis cette validation. Une solution pour la mise de ce calcul peut être utilisation d'un compteur de temps et l'intégration de vitesse du véhicule par exemple. Cette opération de calcul est effectuée via l'opération 172 de calcul de temps et de distance depuis le dernier appui de validation de régénération manuelle, dans le bloc de calcul de demande conducteur 140. L'automate 10 contrôle en parallèle si les conditions du bon déroulement de la régénération sont continument vérifiées, en particulier via le superviseur automatique 12.

Les deux valeurs de temps et de distance sont envoyées dans la cartographie mise en oeuvre via l'opération 174 d'attribution de l'indicateur de confiance instantanée. Tant que la vitesse instantanée ou la vitesse moyenne sont supérieures à un seuil déterminé, par exemple de l'ordre de 30 à 35 kilomètres par heure, alors le coefficient de confiance reste attribué à un niveau élevé, par exemple à une valeur maximale de 1,4. Au fur et à mesure que la régénération s'avance, la vitesse instantanée et la vitesse moyenne peuvent diminuer sans pour autant que la régénération soit dans de mauvaises conditions, si la température de gaz d'échappement par exemple est toujours correcte.

Par exemple, le coefficient maximum de 1,4 peut être attribué si le véhicule a globalement effectué 20 km en 10 min ou 15 km en 20 min. En effet, la régénération aura été très efficace à son début et si elle est moins efficace ensuite, par exemple après dix minutes, le filtre est bien régénéré. Si ensuite, le conducteur effectue encore quelques kilomètres, par exemple jusqu'à 30 minutes de régénération depuis la validation de l'invitation, la régénération est totale et le conducteur peut s'arrêter et couper le moteur. Le conducteur est considéré comme très fiable dans sa validation d'invitation quand le coefficient de confiance est de l'ordre de 1,4 sur 10 à 20 minutes. En effet, il a effectivement effectué un trajet autoroutier dès le début de la régénération qui a été très efficace. La régénération peut s'arrêter avant 30 minutes, dès qu'elle est complètement effectuée après élimination du colmatage par l'élimination des suies.

Par exemple, un coefficient haut de 1,2 peut être attribué si le véhicule a globalement effectué une quinzaine de kilomètres en quinze minutes. En effet, la régénération aura été bien efficace à son début. Le conducteur est considéré comme bien fiable dans sa validation d'invitation quand le coefficient de confiance est de l'ordre de 1,2 à quinze minutes de parcours après la commande manuelle de régénération du filtre à particules. Le coefficient est encore attribué à 1,2 même quand le véhicule n'a parcouru qu'une dizaine de kilomètres en trente minutes, la régénération ayant été suffisante même avec cette vitesse moyenne d'une vingtaine de kilomètres par heure pendant la demi-heure de régénération.

Par exemple, un coefficient moyen de 1 peut être attribué si le véhicule a globalement effectué 15 km en 10 min ou 10 km en 20 min. En effet, la régénération aura été efficace à son début et si elle est moins efficace ensuite, par exemple après dix minutes, le filtre est de toute façon relativement bien régénéré. Ici encore, si le conducteur effectue encore quelques kilomètres jusqu'à 30 minutes de régénération, la régénération est totale. Le conducteur est considéré comme fiable quand le coefficient de confiance est de l'ordre de 1 sur 10 à 20 minutes. En effet, il a effectivement effectué un trajet à régime suffisant du moteur dès le début de la régénération qui a été efficace.

Par exemple, un coefficient relativement bas de 0,8 peut être attribué si le véhicule a globalement effectué 12 km en 10 min ou 8 km en 20 min. En effet, la régénération aura été relativement efficace à son début. Par contre, pour qu'un coefficient plus élevé puisse être attribué sur la fin de la régénération qui devra être plus efficace jusqu'à la fin fixée par exemple à 30 minutes, il faudra que la vitesse du véhicule soit plus grande et/ou le régime moteur relativement important, par exemple autour de 2000 tr/min ou 2500 tr/min pendant une certaine durée d'environ 10 minutes. Dans le cas d'un parcours pendant lequel le véhicule continue à rouler lentement, le coefficient est de 0,8 quand le véhicule parcours par exemple 7 kilomètres en 30 minutes. le conducteur est alors considéré comme moyennement fiable dans sa validation d'invitation à régénération. Le recours à des régénérations imposées par le module automatique 12 est nécessaire si le coefficient est maintenu à 0,8 sur plusieurs régénérations initiées manuellement.

Par exemple, un coefficient bas de 0,6 peut être attribué si le véhicule a globalement effectué 8 km en 10 min ou 6 km en 20 min. En effet, la régénération aura été relativement peu efficace à son début. Elle devrait alors être beaucoup plus efficace jusqu'à la fin fixée par exemple à 30 minutes, et la vitesse du véhicule devrait être plus grande et/ou le régime moteur relativement important pour que la régénération soit effective et que le coefficient attribué soit relevé. Le coefficient est de 0,6 quand le véhicule parcours par exemple seulement 7 kilomètres en 30 minutes. le conducteur est considéré comme peu fiable dans sa validation d'invitation à régénération. Le recours à des régénérations imposées par le module automatique 12 est nécessaire.

Par exemple, un coefficient très bas de 0,4 peut être attribué si le véhicule a globalement effectué 5 km en 10 min ou 3 km en 20 min. En effet, la régénération aura été très peu efficace à son début. Elle devra alors être très efficace sur la fin du parcours pendant lequel se déroule la régénération, jusqu'à la fin de la régénération fixée par exemple à 30 minutes. Pendant cette fin de parcours, la vitesse du véhicule devra être beaucoup plus grande et/ou le régime moteur relativement important. Le coefficient est de 0,4 quand le véhicule parcours par exemple 2 kilomètres en 30 minutes, le conducteur est considéré comme insuffisamment fiable dans sa validation d'invitation à régénération. Le recours à des régénérations imposées par le module automatique 12 est nécessaire.

Par exemple, un coefficient extrêmement bas de 0,2 peut être attribué si le véhicule a globalement effectué moins de deux kilomètres en 5 min, 10 min, 20 min ou 30 min. En effet, la régénération aura été très peu efficace car le conducteur aura lancé cette régénération alors qu'il circule dans un embouteillage, au début comme à la fin du parcours pendant laquelle la régénération était censée être effectuée. Le recours à des régénérations imposées par le module automatique 12 est nécessaire.

Pour un parcours de 15 minutes après la validation, le coefficient est fixé à 1,4 quand le véhicule a effectué environ 17 kilomètres. Il est fixé à 1,2 quand le véhicule a effectué environ 14 kilomètres, à 1 quand le véhicule a effectué environ 12 kilomètres, à 0,8 quand le véhicule a effectué environ 9 kilomètres, à 0,6 quand le véhicule a effectué environ 7 kilomètres, à 0,4 quand le véhicule a effectué environ 4 kilomètres et enfin à 0,2 quand le véhicule a effectué environ 2 kilomètres.

Pour un parcours de 25 minutes après la validation, le coefficient est fixé à 1,4 quand le véhicule a effectué environ 13 kilomètres. Il est fixé à 1,2 quand le véhicule a effectué environ 11 kilomètres, à 1 quand le véhicule a effectué environ 9 kilomètres, à 0,8 quand le véhicule a effectué environ 7 kilomètres, à 0,6 quand le véhicule a effectué environ 5 kilomètres, à 0,4 quand le véhicule a effectué environ 3 kilomètres et enfin à 0,2 quand le véhicule a effectué environ 2 kilomètres.

Avec un coefficient suffisamment au dessus de 0,8 pour que la validation de l'invitation soit considérée comme fiable, quelques conditions prédéterminées d'efficacité de régénération peuvent être résumées comme énoncé ci-après : véhicule ayant parcouru une distance supérieure à sensiblement quinze kilomètres en dix minutes après la validation ; véhicule ayant parcouru une distance supérieure à sensiblement dix kilomètres en vingt minutes après la validation ; véhicule ayant parcouru une distance supérieure à sensiblement sept kilomètres en trente minutes après la validation. A l'inverse, la validation n'est pas fiable lorsque le véhicule a parcouru une distance inférieure ou égale à sensiblement sept kilomètres en trente minutes après la validation ou quand le véhicule effectue un parcours en milieu urbain, avec de faibles vitesses moyennes typiquement inférieures à quinze kilomètres par heure, de nombreux instants de fonctionnement du moteur au ralenti, de nombreuses variations de régime moteur et de quantité de carburant injecté lors des redémarrages du véhicule... Des valeurs équivalentes à celles résumées ci-dessus peuvent être considérées en les faisant varier sensiblement à dix pour cent en plus ou en moins.

Afin de fiabiliser l'attribution de coefficient de confiance calculé lors de l'opération 174 d'attribution de l'indicateur de confiance instantanée, cet indicateur est filtré dans l'opération 176 de filtrage sur les N derniers appuis de validation par le conducteur. Ce filtrage permet de donner le droit à l'erreur au conducteur. En effet, avec toutes les bonnes volontés possibles, le conducteur peut par exemple changer d'avis sur son parcours et avoir besoin de s'arrêter alors que la régénération du filtre à particules est en cours. Par contre, si ce comportement se répète trop souvent, il faut que l'automate 10 accorde moins d'importance aux validations effectuées le conducteur. Le recours à des régénérations imposées par le module automatique 12 est alors nécessaire.

Le filtrage utilisé peut être un simple filtre passe bas ou une moyenne pondérée et mise à jour sur les N derniers appuis de validation d'invitation. Le nombre de ces appuis sera par exemple de cinq et sera plus grand pour augmenter le droit à l'oubli et à l'erreur d'utilisation par le conducteur. Une contrainte importance étant la dilution, le filtre est réinitialisé si la confiance au moment de la vidange correspond à un coefficient inférieur à 1, pour constituer une remise à niveau de coefficient de confiance lors de vidanges qui peuvent être effectuées par exemple lorsque le véhicule est vendu pour changer de propriétaire ou pour que le même conducteur puisse réutiliser l'option avec plus de maturité

Avantageusement, les validations d'invitation sont corrigées jusqu'à une certaine limite dans le bloc 142 de calcul de demande par le conducteur, le seuil de ces conditions résultant de l'indicateur filtré. Plus les validations du conducteur sont considérées comme fiables par l'automate 10, du fait que le conducteur utilise à bon escient les validations des régénérations commandées manuellement, plus souvent l'automate 10 donnera la possibilité au conducteur de commander les régénération manuellement. Un système de sauvegarde peut aussi être ajouté pour mémoriser la durée des parcours et les distances parcourues après chaque validation de régénération commandée manuellement, en tenant compte de ces données dans le filtrage du coefficient de confiance. Avantageusement, si le coefficient de confiance est toujours élevé, la régénération peut être demandée par l'automate 10 quand le colmatage du filtre à particules est important, en espaçant ainsi les régénérations et en réduisant le risque de dilution de l'huile par le carburant.

Par ailleurs, en variante, l'automate 10 pourrait moins utiliser les paramètres sur le temps de parcours et les distances parcourues après une validation par le conducteur. Il pourrait baser l'indicateur de confiance sur des critères axés sur la sévérité de roulage. Par exemple, ces critères sont les variations de régime moteur, le temps de fonctionnement passé au ralenti représentatif d'un parcours défavorable dans un embouteillage ou un régime relativement important et favorable du moteur comme lors d'un trajet de type autoroute. Dans cette hypothèse, pour disposer d'un coefficient quantifiée de confiance, il s'agit de calculer un niveau moyen de sévérité de roulage pendant un temps minimum. Le filtrage est toujours souhaitable.

Après le filtrage, il s'agit de calculs dans le bloc 141 de calcul de logique d'allumage de message.

Pour demander l'allumage du voyant d'alerte ou l'affichage d'un message d'invitation pour effectuer une régénération du filtre à particules, il faut que plusieurs conditions soient remplies simultanément afin de limiter la fréquence de ces régénérations. En effet, le système de filtre à particules n'est pas prévu pour encaisser des lancements de régénération espacés seulement de quelques dizaines de kilomètres. Quelques conditions sont donc ajoutées pour prendre en compte l'état du système de filtre à particules.

Pour déclencher l'allumage du voyant d'alerte d'invitation ou l'affichage d'un message d'invitation, il faut donc une masse de suie estimée entre la donnée Mmax de masse maximum de suie dans le filtre à particules et la donnée Mmin de masse minimum de suie dans le filtre à particules en comparaison de la sortie 22S du module 22 de modèle de chargement du filtre à particules. L'opérateur 147 de calcul de chargement du filtre s'occupe de ces calculs. Il faut aussi une dilution courante inférieure à une valeur dépendant de la distance depuis la dernière régénération, les conditions de dilution étant contrôlée dans la cartographie référencée DLmax à la figure 2. Il faut également une surconsommation de carburant qui soit inférieure à une valeur cohérente avec la surconsommation maximale SCmax nécessaire à la régénération. Typiquement il s'agit de quelques pour cent supplémentaires de consommation qui sont contrôlés par l'opérateur 151. Enfin, il faut tenir compte du seuil de confiance minimum SFmin, le contrôle étant effectué par l'opérateur 155 et le coefficient de confiance étant utilisé par d'autres opérateurs référencés 147 et 149. Quand les conditions sont remplies, l'invitation peut être donnée au conducteur.

Dans le procédé décrit en détail précédemment, il est avantageusement prévu une stratégie d'envoi de messages d'invitation d'une régénération commandée manuellement pour la régénération du filtre à particules, tout comme une stratégie prévoyant de contrôler la bonne utilisation de réponse à l'invitation de la part du conducteur, via la mise à jour d'un coefficient de confiance. Ainsi, quand l'automate calcule que la nécessité d'effectuer une régénération approche, l'automate prévient le conducteur d'une possibilité de régénération déclenchée manuellement via l'interface homme-machine, tout en contrôlant la valeur de paramètres représentatifs du fonctionnement du moteur tel que la dilution de l'huile, ou le colmatage du filtre.

Avantageusement, le procédé permet une implication du conducteur pour les régénérations du filtre à particules par les interactions volontaires via l'interface homme-machine et de ses invitations à effectuer des régénérations. Ainsi le conducteur est responsabilisé et, par ses réponses à l'automate 10, il peut participer à l'entretien du filtre à particules pour en allonger la durée de vie. En outre, le risque de lancement de régénération du filtre à particules dans des conditions de roulage inappropriées, par exemple lors de l'utilisation du véhicule en milieu urbain, est minimisé.

Avantageusement, le conducteur pouvant valider une invitation pour effectuer une régénération du filtre à particules, il peut par exemple valider une telle invitation avant de commencer un trajet habituel dont il connaît les conditions de roulage compatibles avec une telle régénération.

Dans divers modes de réalisation, l'interface homme-machine peut être constituée par des boutons et des voyants spécifiques de dispositifs d'instrumentation aménagés sur la planche de bord, un écran tactile pourvu de menus. Bien sûr, tout les dispositifs équivalents, par exemple par commande vocale, pour constituer une interface sont envisageables, par exemple un petit écran pour afficher des messages et, associé à cet écran, des boutons ou touches de validation adjacents.

## Revendications

1. Procédé de commande de régénération d'un filtre à particules de système d'échappement pour véhicule automobile, comprenant une étape d'invitation (14M) pour prévenir le conducteur du véhicule qu'il peut lancer une régénération du filtre par une commande via une interface homme-machine susceptible d'être commandée par le conducteur lors d'une étape de validation (14B) de ladite invitation, **caractérisé en ce que**, après l'étape d'invitation (14M) ayant donné lieu à l'étape de validation par le conducteur, pendant la régénération du filtre, il est procédé à une étape de détermination de degré de confiance de validation (174) en fonction du degré de correspondance entre les conditions de roulage pendant ladite régénération et des conditions prédéterminées d'efficacité de régénération, puis à une étape de mémorisation du degré de confiance de manière que, suivant le degré de confiance mémorisé, les régénérations à effectuer ultérieurement puissent être effectuées soit après une étape de validation d'invitation ultérieure, soit automatiquement par un automate sans prise en compte d'étape ultérieure de validation.

2. Procédé selon la revendication précédente, **caractérisé en ce que** le degré de correspondance entre les conditions de roulage pendant la régénération et les conditions prédéterminées d'efficacité de régénération est pondéré suivant une valeur mémorisée antérieurement de degré de correspondance (174).

3. Procédé selon l'une quelconque des revendications précédentes, **caractérisé en ce que** le degré de correspondance (174) entre les conditions de roulage pendant la régénération et les conditions prédéterminées d'efficacité de régénération est déterminé en fonction de données de distance parcourue et de temps de parcours pendant la régénération.

4. Procédé selon la revendication 3, **caractérisé en ce que** les conditions de roulage pendant la régénération sont en correspondance des conditions prédéterminées d'efficacité de régénération quand il est déterminé lors de l'étape de détermination du degré de confiance (174) que le véhicule a parcouru une distance supérieure à sensiblement quinze kilomètres en dix minutes après l'étape de validation.

5. Procédé selon la revendication 3, **caractérisé en ce que** les conditions de roulage pendant la régénération sont en correspondance des conditions prédéterminées d'efficacité de régénération quand il est déterminé lors de l'étape de détermination du degré de confiance (174) que le véhicule a parcouru une distance supérieure à sensiblement dix kilomètres en vingt minutes après l'étape de validation.

6. Procédé selon la revendication 3, **caractérisé en ce que** les conditions de roulage pendant la régénération sont d'une part en correspondance des conditions prédéterminées d'efficacité de régénération quand il est déterminé lors de l'étape de détermination du degré de confiance (174) que le véhicule a parcouru une distance supérieure à sensiblement sept kilomètres en trente minutes après l'étape de validation et d'autre part sans correspondance avec les conditions prédéterminées d'efficacité de régénération quand le véhicule a parcouru une distance inférieure ou égale à sensiblement sept kilomètres en trente minutes après l'étape de validation.

7. Procédé selon l'une quelconque des revendications précédentes, **caractérisé en ce que**, quand le véhicule effectue un parcours en milieu urbain, les conditions de roulage pendant la régénération sont sans correspondance avec les conditions prédéterminées d'efficacité de régénération.

8. Procédé selon l'une quelconque des revendications précédentes, **caractérisé en ce que** le degré de correspondance (174) entre les conditions de roulage pendant la régénération et les conditions prédéterminées d'efficacité de régénération est déterminé en fonction du régime du moteur (24R) et des variations de ce régime (26R) pendant la régénération.

9. Procédé selon l'une quelconque des revendications précédentes, **caractérisé en ce que**, pendant l'étape de détermination de degré de confiance (174) en fonction du degré de correspondance entre les conditions de roulage pendant la régénération et des conditions prédéterminées d'efficacité de régénération, un coefficient de confiance est déterminé puis est mémorisé lors de l'étape de mémorisation.

10. Véhicule automobile comportant un moteur thermique, un système d'échappement à filtre à particules, un automate (10) de gestion de procédé de commande de régénération du filtre à particules, un dispositif adapté à inviter le conducteur du véhicule à lancer une régénération du filtre et une interface homme-machine susceptible d'être commandée par le conducteur pour valider ladite invitation de lancement de la régénération, le procédé géré par l'automate étant conforme à l'une quelconque des revendications précédentes.
